(19) Europäisches Patentamt
European Patent Office
Office européen des brevets

(11) **EP 4 209 546 A1**

(12) **EUROPEAN PATENT APPLICATION**

(43) Date of publication:
**12.07.2023 Bulletin 2023/28**

(21) Application number: **22150778.3**

(22) Date of filing: **10.01.2022**

(51) International Patent Classification (IPC):
***C08L 23/08*** (2006.01)

(52) Cooperative Patent Classification (CPC):
(C-Sets available)
**C08F 210/16; C08L 23/0815; C08L 23/12;**
**F16L 9/12;** C08L 2205/025          (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Abu Dhabi Polymers Co. Ltd (Borouge) LLC**
  **Abu Dhabi (AE)**
• **Borealis AG**
  **1020 Vienna (AT)**

(72) Inventors:
• **KUMAR, Ashish**
  **Abu Dhabi (AE)**
• **ANTONY, Nisha**
  **Abu Dhabi (AE)**
• **KALIAPPAN, Senthil Kumar**
  **Abu Dhabi (AE)**

(74) Representative: **Kador & Partner Part mbB**
    **Corneliusstraße 15**
    **80469 München (DE)**

(54) **POLYETHYLENE PIPE RESIN WITH IMPROVED LONG TERM HYDROSTATIC STRENGTH**

(57)      The present invention relates to a polyethylene composition comprising a base resin which comprises
(A) a first ethylene homo- or copolymer fraction, and
(B) a second ethylene copolymer fraction,
wherein
fraction (A) has a lower molecular weight than fraction (B),
fraction (A) is present in an amount of 45.0 to 55.0 wt.%, preferably 46.0 to 53.0 wt.%, more preferably 46.5 to 52.0 wt.%, based on the total weight of the base resin,
fraction (B) is present in an amount of 55.0 to 45.0 wt.%, preferably 54.0 to 47.0 wt.%, more preferably 53.5 to 48.0 wt.%, based on the total weight of the base resin,
the base resin has a density of 945 kg/m$^3$ to 958 kg/m$^3$, more preferably of 947 to 956 kg/m$^3$, and most preferably of 948 kg/m$^3$ to 954 kg/m$^3$,
the polyethylene composition has a melt flow rate MFR$_5$ of 0.15 to 0.30 g/10min, preferably of 0.20 to 0.29 g/10min, and still more preferably of 0.22 to 0.28 g/10min,
the polyethylene composition has a flow rate ratio FRR$_{21/5}$ of 25 to 35, more preferably of 28 to 34,
the polyethylene composition has a molecular weight distribution MWD of 20 to 30, more preferably from 21 to 29, and
the polymer composition has an average chain length of 900 carbons or higher, to a process for producing the polyethylene composition, to an article, especially a pipe comprising the polyethylene composition and to the use of the polyethylene composition for the production of an article, especially a pipe.

EP 4 209 546 A1

(52) Cooperative Patent Classification (CPC): (Cont.)

C-Sets
**C08F 210/16, C08F 2/001;**
**C08F 210/16, C08F 4/6492;**
**C08F 210/16, C08F 4/6555;**
**C08L 23/0815, C08L 23/0815;**
C08F 210/16, C08F 210/14, C08F 2500/04,
C08F 2500/07, C08F 2500/10, C08F 2500/12,
C08F 2500/27, C08F 2500/31

**Description**

The present invention relates to a multimodal polyethylene composition for the production of a high-pressure pipe, to a process for obtaining the composition, to an article, especially a pipe, comprising the composition.

Polyolefin pipes and especially polyethylene pipes are conventionally used for transport of water, gas as well as industrial liquids and slurries. Due to their versatility, ease of production and installation as well as non-corrosivity, their use is constantly increasing.

New generation pipe products aim to down gauge the pipe thickness (light weighting) saving cost of raw material for same pressure application requirement by development of resins which has improved pressure resistance capability however enough slow crack growth resistance and rapid crack propagation resistance as per the ISO standard requirement.

Depending on the pressure pipes made from a polyethylene composition can withstand at 20°C over 50 years lifetime, the compositions are classified, for example, as PE100 or PE 112.

Classification of PE pipe materials used for pressure applications is governed by ISO 12162. The standard also includes nomenclature for materials with a minimum required strength (MRS), i.e. their capability to withstand different hoop stresses during 50 years at 20 °C without fracturing, of 1 to 50 MPa.

The MRS classification is based on the lower confidence limit ($\sigma_{LPL}$) of hoop strength at 20°C for 50 years, which is derived from the extrapolation based on ISO 9080. A polyethylene material with an $\sigma_{LPL}$ value between 8 and 10 MPa is classified as PE80; while PE100 has an $\sigma_{LPL}$ between 10 and 11.2 MPa. The $\sigma_{LPL}$ at 20°C for 50 years MPa of most commercially available PE100 grade resins is well above 10 MPa, thus offering an additional safety margin. The $\sigma_{LPL}$ at 20°C for 50 years MRS of some recently developed pipe resins is 11.3 MPa, which falls into the next defined class of 11.2 to 12.5 MPa. According to ISO 12162, these materials are designated as PE112. The service temperature for PE112 is usually within the temperature range from about 0 °C to about 50 °C.

To meet the PE100 requirements with multimodal resins manufactured by conventional Ziegler-Natta catalysts, the density needs to be at least 945 kg/m$^3$ and to meet PE112 requirements the density needs to be further increased.

However, the density of a polyethylene resin is directly connected with its crystallinity. The higher the crystallinity of a polyethylene resin the lower its slow crack growth resistance. In other words, all polyethylene materials for pressure resistance of a pipe suffer from the dependency of crystallinity and insofar density and the slow crack growth. When the density is increased, the resistance to slow crack growth (SCG) decreases.

The manufacture of polyethylene materials to be used in pressure pipes is discussed for example in an article by Scheirs et al (Scheirs, Bohm, Boot and Leevers: PE100 Resins for Pipe Applications, TRIP Vol. 4, No 12 (1996) pp. 408-415).

WO 00/22040 discloses a pipe having good mechanical properties made from a bimodal resin. EP 1 985 660 A1 discloses a pipe or a supplementary pipe article with improved slow crack growth resistance comprising a polyethylene composition comprising a base resin, which comprises a first ethylene homo- or copolymer fraction (A), and a second ethylene homo- or copolymer fraction (B), wherein fraction (A) has a lower average molecular weight than fraction (B), and wherein the base resin has a density in the range of 945 to 949 kg/m$^3$, an MFR$_5$ in the range of 0.2 to 0.4 g/10 min., a comonomer content of higher than 2.0 wt.-% and a SHI(2.7/210) in the range of 55 to 100.

It is an object of the present invention to provide a polyethylene pipe material which meets the requirements for a PE112 resin and, at the same time, has a combination of good slow crack growth resistance, good rapid crack propagation resistance, and resistance to sagging.

The present invention is based on the surprising finding that such a pipe material can be provided by a selecting multimodal polyethylene base resin which has a comparatively high average chain length, e.g. an average chain length of 900 or higher.

The present invention therefore provides a polyethylene composition comprising a base resin which comprises, or consists of,

(A) a first ethylene homo- or copolymer fraction, preferably ethylene homopolymer fraction, and

(B) a second ethylene copolymer fraction,

wherein

fraction (A) has a lower molecular weight than fraction (B),

fraction (A) is present in an amount of 45.0 to 55.0 wt.%, preferably 46.0 to 53.0 wt.%, more preferably 46.5 to 52.0 wt.%, based on the total weight of the base resin,

fraction (B) is present in an amount of 55.0 to 45.0 wt.%, preferably 54.0 to 47.0 wt.%, more preferably 53.5 to 48.0 wt.%, based on the total weight of the base resin,

the base resin has a density of 945 kg/m$^3$ to 958 kg/m$^3$, more preferably of 947 to 954 kg/m$^3$,

the polyethylene composition has a melt flow rate MFR$_5$ of 0.15 to 0.30 g/10min, preferably of 0.20 to 0.29 g/10min, and still more preferably of 0.22 to 0.28 g/10min,

the polyethylene composition has a flow rate ratio FRR$_{21/5}$ of 25 to 35, more preferably of 28 to 34,

the polyethylene composition has a molecular weight distribution MWD of 20 to 30, more preferably from 21 to 29, and

the polymer composition has an average chain length of 900 carbons or higher.

The polyethylene composition of the invention due to its combination of design parameters has an increased hydrostatic pressure performance, hence is for manufacture of pipes having a long term hydrostatic strength of 11.3 MPa or higher, and meets the requirements of a PE112 resin together with a balance of good stress crack resistance, rapid crack propagation resistance, and resistance to sagging.

The expression 'ethylene homopolymer' according to the present invention relates to an ethylene polymer that consists substantially, i.e. to least 99% by weight, more preferably at least 99.5% by weight, still more preferably at least 99.8% by weight of ethylene and most preferably is an ethylene polymer which only includes ethylene monomer units.

The term 'base resin' denotes the entirety of polymeric components in the polyethylene composition according to the invention, i.e. it denotes the polymeric part of the composition without fillers such as carbon black. The base resin usually is making up at least 90 wt.% of the total composition. Preferably, the base resin is consisting of polymer fractions (A) and (B), optionally further comprising a prepolymer fraction in an amount of up to 5 wt.%, more preferably up to 3 wt.%, and most preferably up to 2 wt.% of the total base resin. A person skilled in the art will understand that measurements as to properties of the base resin require the presence of stabilizers.

It is preferred in the inventive polyethylene composition that the second ethylene copolymer fraction (B) is a copolymer of ethylene and $C_4$-$C_{12}$ alpha-olefin, more preferably is a copolymer of ethylene with 1-butene and/or 1-hexene, and most preferably is a copolymer of ethylene and 1-hexene.

Preferably, low molecular weight fraction (A) of the base resin has a melt flow rate MFR$_2$ of 80 to 250 g/10min, more preferably of 100 to 200 g/10min, and most preferably of 120 to 190 g/10min.

It is a finding of the invention that the selection of a comparatively low melt flow rate MFR$_2$ of fraction (A) which is indicative of a higher molecular weight and hence crystallinity of the low molecular weight fraction is further helpful to achieve the objects of the present invention.

In the polymer composition of the invention the base resin preferably has a content of units derived from alpha-olefins other than ethylene, most preferably from hexene-1, of 0.10 to 0.50 mol%, more preferably of 0.15 to 0.45 mol%, and still more preferably of 0.20 to 0.40 mol%.

Furthermore, it is preferred that fraction (B) of the base resin has a content of units derived from alpha-olefins other than ethylene, most preferably from hexene-1, of from 0.20 to 1.0 mol%, more preferably of from 0.30 to 0.9 mol% and most preferably of from 0.40 to 0.80 mol%.

The polyethylene composition preferably has shear thinning index SHI$_{(5/300)}$ of from 50 to 300, more preferably of from 80 to 250 and most preferably of from 100 to 200.

Still further, the polymer composition has a degree of polymerization of 450 or higher.

The slow crack resistance of a pipe material is imparted to the material by the base resin, and can, for example, be tested by the strain hardening behavior of the resin.

In a preferred embodiment, the polyethylene composition has strain hardening modulus of 50 or higher, more preferably of 54.5 or higher.

The polyethylene composition usually has a strain hardening modulus of not more than 80 MPa or of not more than 75 MPa.

It is further important to ensure that the polymer composition, for example, after being extruded into a pipe and before being cooled, does not flow by gravity from the upper part of the pipe to a lower part and therefore create a non-uniform distribution of polymer around the cross-section of the pipe. This phenomenon is called tendency of a polymer to display gravity flow or 'sagging'. The sagging resistance is the property of a polymer pipe to withstand this tendency. Sagging resistance may be determined by a rheological or a melt index method.

The determination is done in the present invention by a method which correlates well with the above mentioned melt index method, and relates to the rheology of the polymer. The method is based on determination of the viscosity of the polymer at a very low, constant shear stress of 747 Pa (eta$_{747}$), as described in detail below. The viscosity of the polymer at this shear stress is determined at a temperature of 190 °C and has been found to be inversely proportional to the gravity flow of the polymer, i.e. the greater the viscosity the lower the gravity flow. According to the present invention the polyethylene composition preferably exhibits a viscosity at $eta_{747}$ of at least 300 kPa*s, preferably at least 350 kPa*s, even more preferably at least 400 kPa*s.

Usually, the polyethylene composition has an $eta_{747}$ of 300 to 750 kPa*s, more preferably of 350 to 725 kPa*s, and most preferably of 400 to 700 kPa*s.

The polyethylene composition of the invention has a good impact strength which can be measured in the Charpy Impact Strength test as described in detail below at different temperatures.

Accordingly, the polyethylene composition preferably has a Charpy Impact Strength (CIS) at 23 °C of higher than 15 kJ/m$^2$, more preferably of higher than 20 kJ/m$^2$, and/or a Charpy Impact Strength (CIS) at -20 °C of higher than 10 kJ/m$^2$, more preferably of higher than 12 kJ/m$^2$.

Fraction (A) of the base resin may be an ethylene homo- or copolymer.

If fraction (A) is an ethylene copolymer, it is preferably a copolymer of ethylene with an alpha-olefin having from 3 to 8 carbon atoms, more preferably 4 to 6 carbon atoms, and most preferably is butene-1 or hexene-1.

Preferably, the amount of comonomer, if present, in fraction (A) is 1 mol% or smaller, e.g. from 0.1 to 0.5 mol%.

However, preferably fraction (A) of the base resin is an ethylene homopolymer. Fraction (A) preferably has a density of 960 to 980 kg/m$^3$.

As mentioned above, preferably, fraction (A) of the base resin has an $MFR_2$ of 80 to 250 g/10min, more preferably of 100 to 200 g/10min, and most preferably of 120 to 190 g/10min.

Fraction (A) and/or fraction (B) may consist of a single polymer fraction made in one reactor, or may consists of two or more partial fractions made in separate reactors.

It is preferred that fraction (A) and/or fraction (B) consist of two partial fractions or a single fraction.

Most preferably, fraction (A) consists of one single fraction or two partial fractions, preferably produced in one or two loop reactors, respectively, and fraction (B) consists of one single fraction, preferably produced in a gas phase reactor.

The base resin of the polyethylene composition of the present invention comprises fractions (A) and (B) which differ (at least) in their molecular weight. Such resins are designated to be multimodal polyethylenes. The prefix "multi" relates to the number of different polymer fractions the base resin is consisting of. Thus, for example, a base resin consisting of two different fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

It is preferred in the present invention that the base resin is a bimodal polyethylene base resin, i.e. the base resin preferably consists of fractions (A) and (B) and, optionally, a small amount of a prepolymer which is considered a part of the polymer fraction produced in the first reactor.

If one or more fractions of the base resin consist of partial fractions produced in separate reactors, it is preferred that the reaction conditions are chosen so that essential the same polymer is produced therein. This means that if, for example and preferably, the base resin consists of fraction (A) and (B) and fraction (A) is produced as two partial fractions in two separate loop reactors under conditions so that essentially the same or the same polymer is produced therein, the base resin will still be a bimodal resin as it consists of two fractions of different polymers.

Furthermore, the polyethylene composition of the invention preferably has a weight average molecular weight Mw of from 150,000 to 350,000 g/mol, more preferably of 200,000 to 300,000 g/mol.

The polymer composition preferably has a number average molecular weight Mn of 8,700 g/mol or higher, more preferably of 8,900 g/mol or higher and most preferably of 9,000 g/mol or higher

The polyethylene composition according to the invention has a very good resistance to rapid crack propagation. Accordingly, the composition preferably has a critical pressure $p_c$ in the rapid crack propagation (S4 test) of 10 bar or higher, more preferably of 12 bar or higher.

Preferably, the polyethylene composition has a tensile modulus of 1100 MPa or higher.

In addition to the base resin, usual additives for utilization with polyolefins, such as pigments, stabilizers (antioxidant agents), antiacids and/or anti-UVs, antistatic agents and utilization agents (such as processing aid agents) may be present in the polyethylene composition. Preferably, the amount of these additives is 10 wt.% or below, further preferred 8 wt.% or below, still more preferred 5 wt.% or below, and still more preferred 4 wt.% or below of the total composition.

Preferably, the base resin makes up at least 90 wt.%, more preferably at least 92, and still more preferably at least 93 wt.% of the polyethylene composition.

In one embodiment of the present invention, the polyethylene composition of the invention comprises carbon black. Carbon black imparts black colour to the polyethylene composition and, at the same time, protects the composition from UV radiation. Still further, the addition of carbon black increases the density of the polyethylene composition compared to that of the base resin.

All embodiments and preferred embodiments as described hereinabove for the base resin and for the polyethylene composition apply also to the polyethylene composition comprising carbon black. Furthermore, the following preferred embodiments apply to the polyethylene composition comprising carbon black in addition.

In this embodiment, it is preferred that the polyethylene composition consists of the base resin, carbon black, further (usual) additives in any one of the amounts as herein described and optionally any carrier material used to compound the base resin with the pigment(s)/additives. The further additives preferably are present in amount of 3 wt.% or less, more preferred of 2.5 wt.% or less, and most preferred of 2 wt.% or less.

Preferably, carbon black is present in the polyethylene composition in an amount of 1 to 8 wt.%, more preferably of 1 to 4 wt.%, still more preferably from 1.5 to 3 wt.-%, and even more preferably of 2.0 to 2.5 wt. % of the total composition.

Usually, the amount of carbon black added is selected so that the density of the carbon black-containing polyethylene composition is from 8 to 15 $kg/m^3$, more preferably from 9 to 14 $kg/m^3$ higher than that of the base resin.

It is preferred that the polyethylene composition comprising carbon black has a density of from 955 to 968 $kg/m^3$, more preferably from 957 to 966 $kg/m^3$, and most preferably from 958 to 964 $kg/m^3$.

Carbon black is usually added in the form of a master batch, i.e. as a mixture of e.g. an HDPE and carbon black, in which carbon black is present in an amount of e.g. 30 to 50 wt.%.

**Process**

The present invention furthermore relates to a process for producing a polyethylene composition in any one of the above-described embodiments wherein the base resin is produced in a multistage polymerization process in the presence of a Ziegler-Natta catalyst.

A multi-stage process is a process which makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor and the second is formed in the second reactor in the presence of the first component. In this way, the two components are more intimately mixed, since one is formed in the presence of the other.

The polymerization reactions used in each stage may involve conventional ethylene homopolymerization or copolymerization reactions, e.g. gas phase, slurry phase, liquid phase polymerizations, using conventional reactors, e.g. loop reactors, gas phase reactors, batch reactors, etc.

The polymerization may be carried out continuously or batchwise, preferably the polymerization is carried out continuously.

Known two-stage processes are for instance liquid phase-liquid phase processes, gas phase-gas phase processes and liquid phase-gas phase processes. It is also known that these two-stage processes can further be combined with one or more additional polymerization steps selected from gas phase, slurry phase or liquid phase polymerization processes.

In the preferred multistage process, the lower molecular weight and higher molecular weight polymers, fractions (A) and (B), are produced in different polymerization steps, in any order.

The low molecular weight polymer (fraction (A)) can be prepared in the first polymerization step and the high molecular weight hexene-1 copolymer (fraction (B)) in the second polymerization step. This can be referred to as the normal mode and is preferred.

The HMW copolymer fraction (B) may also be prepared in the first polymerization step and the LMW polymer fraction (A) in the second polymerization step. This can be referred to as the reverse mode.

If the LMW fraction is produced in the first polymerization step, the melt flow rate of the first ethylene fraction (A) can be directly measured as described herein. If the LMW fraction is produced in the second polymerization step, the melt flow rate of the LMW ethylene fraction (A) can be calculated on the basis of the weight ratios of the LMW fraction and the HMW fraction and the molecular weight of the total polyethylene composition.

In addition, subtracting GPC curves, when fractions of each polymer are known is also possible for determining melt flow rate of the polymer produced in the second stage of a multi-stage polymerization process.

A two-stage process can, for example be a slurry-slurry or a gas phase-gas phase process, particularly preferably a slurry-gas phase process. Optionally, the process according to the invention can comprise one or two additional polymerization steps.

These optional one or two additional polymerization steps preferably comprise slurry polymerization steps.

The slurry and gas phase stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US 4,582,816 A, US 3,405,109 A, US 3,324,093 A, EP 479 186 A and US 5,391,654 A.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

In a preferred embodiment of the invention, the LMW fraction is produced first and the HMW fraction is produced in the presence of LMW fraction.

The resulting end product consists of an intimate mixture of the polymer fractions from the reactors, the different molecular-weight-distribution curves of these polymers together forming a molecular-weight-distribution curve having a broad maximum or several maxima, i.e. the end product is a multimodal polymer mixture.

It is preferred that the multimodal base resin of the polyethylene composition according to the invention is a bimodal polyethylene mixture consisting of polymer fractions (A) and (B), optionally further comprising a small prepolymerization fraction. It is also preferred that this bimodal polymer mixture has been produced by polymerization as described above under different polymerization conditions in two or more polymerization reactors connected in series. Owing to the flexibility with respect to reaction conditions thus obtained, it is most preferred that the polymerization is carried out in a loop reactor/a gas-phase reactor combination.

According to a preferred embodiment of the invention, the process comprises a slurry-phase polymerization stage and a gas-phase polymerization stage. One suitable reactor configuration comprises one to two slurry reactors, preferably loop reactors, and one gas-phase reactor. Such polymerization configuration is described e.g. in patent literature, such as in WO92/12182 A1, WO96/18662 A1 and WO2010054732 of Borealis and known as Borstar technology.

The catalyst may be transferred into the polymerization zone by any means known in the art. It is thus possible to suspend the catalyst in a diluent and maintain it as homogeneous slurry. Especially preferred it is to use oil having a viscosity from 20 to 1500 mPa*s as diluent, as disclosed in WO2006/063771 A1. It is also possible to mix the catalyst with a viscous mixture of grease and oil and feed the resultant paste into the polymerization zone. Further still, it is possible to let the catalyst settle and introduce portions of thus obtained catalyst mud into the polymerization zone in a manner disclosed, for instance, in EP 428 054 A1.

The polymerization in slurry usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amount of methane, ethane and/or butane.

The temperature in the slurry polymerization is typically from 40 to 115 °C, preferably from 60 to 110 °C and in particular from 70 to 100 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. It is especially preferred to conduct the polymerization in loop reactor. Hydrogen is fed, optionally, into the reactor to control the molecular weight of the polymer as known in the art.

Furthermore, one or more α-olefin comonomers may be added into the reactor to control the density and morphology of the polymer product. The actual amount of such hydrogen and comonomer feeds depends on the desired melt index (or molecular weight) and density (or comonomer content) of the resulting polymer.

The polymerization in gas-phase may be conducted in a fluidized bed reactor, in a fast-fluidized bed reactor or in a settled bed reactor or in any combination of these.

Typically, the fluidized bed or settled bed polymerization reactor is operated at a temperature within the range of from 50 to 100 °C, preferably from 65 to 90 °C. The pressure is suitably from 10 to 40 bar, preferably from 15 to 30 bar.

In addition, antistatic agent(s) may be introduced into the slurry and/or gas-phase reactor if needed.

The process may further comprise pre- and post-reactors.

The polymerization steps may be preceded by a pre-polymerization step. The pre-polymerization step may be conducted in slurry or in gas phase. Preferably, pre-polymerization is conducted in slurry, and especially in a loop reactor. The temperature in the pre-polymerization step is typically from 0 to 90 °C, preferably from 20 to 80 °C and more preferably from 30 to 70 °C.

The pressure is typically from 1 to 150 bar, preferably from 10 to 100 bar.

The polymerization may be carried out continuously or batch wise, preferably the polymerization is carried out continuously.

In a first example of the present process, polymerizing olefins is accomplished in a multi-stage polymerization process comprising at least one gas-phase reactor for producing ethylene (co)polymers.

In a second example of the present process, polymerizing ethylene with comonomers as herein discussed is accomplished in a multi-stage polymerization process comprising at least one slurry reactor, such as one or two slurry reactors, preferably two slurry reactors, and one gas-phase reactor.

A chain-transfer agent, preferably hydrogen, is added as required to the reactors, and preferably 100 to 1200 moles of $H_2$ per one kmol of ethylene are added to the reactor, when the LMW fraction is produced in this reactor, and 0 to 70 moles of $H_2$ per one kmol of ethylene are added to the gas phase reactor when this reactor is producing the HMW fraction.

**Catalyst**

The polymerization is conducted in the presence of an olefin polymerization catalyst. The catalyst preferably is a Ziegler-Natta (ZN) catalyst which generally comprises at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a $MgCl_2$ based support. Preferably, the support is silica or a $MgCl_2$ based support.

Particularly preferred Ziegler-Natta catalysts are such as described in WO 2016/ 206768 A1 and EP 1 378 528 A1.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. Especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound, for example an aluminium compound on a magnesium dihalide, like magnesium dichloride. Such catalysts are disclosed, for instance, in WO 2005/118655, EP 810235, WO2014/096296 and WO2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1,000, preferably from 3 to 100 and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, or isomers or mixtures thereof. Internal organic compounds are also often called as internal electron donors.

**Compounding**

The composition of the invention preferably is produced in a process comprising a compounding step, wherein the composition, i.e. the blend, which is typically obtained as a polyolefin base resin powder from the reactor, is extruded in an extruder and then pelletised to polymer pellets in a manner known in the art. The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In certain embodiments, the extrusion step is carried out using feed rates of 100 kg/h to 500 kg/h, more preferably 150 kg/h to 300 kg/h.

The screw speed of the extruder may be 200 rpm to 500 rpm, more preferably 300 rpm to 450 rpm.

In certain embodiments, in said extrusion step the SEI (specific energy input) of the extruder may be 100 kWh/ton to 400 kWh/ton, more preferably 150 kWh/ton to 300 kWh/ton.

The melt temperature in said extrusion step is preferably 200°C to 300°C, more preferably 230°C to 270°C.

The present invention furthermore relates to an article, preferably a pipe or a pipe fitting, comprising, or consisting of, the polyethylene composition in any one of the embodiments as herein described.

Preferably, such a pipe has a long term hydrostatic strength of 11.3 MPa or higher at 20 °C and 50 yrs according to EN ISO9080.

The invention also relates to the use of a polyethylene composition in any one of the embodiments as herein described for producing an article, preferably a pipe or a pipe fitting.

Unless explicitly described otherwise, the description of the present invention is to be understood so that one or more of any of the above described preferred embodiments of the invention can be combined with the invention described in its most general features.

For sake of completeness it should be remarked that while certain properties (such as short term pressure resistance or the point loading resistance) are tested on specific test pipe specimens (such as pipes of a specific thickness and diameter), they are nevertheless properties of the polymer composition used for making the test pipe specimen.

In the following, the measurement and determination methods for the parameters as used herein are given and the present invention is further illustrated by way of example and comparative example by reference to the figures, which show:

**Measurement and Determination Methods**

**a)** Measurement of melt flow rate MFR

The melt flow rate (MFR) was determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg ($MFR_5$) or 21.6 kg ($MFR_{21}$).

The quantity FRR (flow rate ratio) is an indication of molecular weight distribution and denotes the ratio of flow rates at different loadings. Thus, $FRR_{21/5}$ denotes the value of $MFR_{21}/MFR_5$.

b) Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 16348 (16k) transients were acquired per spectrum. This setup was chosen due its high sensitivity towards sometimes low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta$+) at 30.00 ppm (J. Randall, Macromol. Sci., Rev. Macromol. Chem. Phys. 1989, C29, 201).

Characteristic signals corresponding to the incorporation of 1-hexene were observed (J. Randall, Macromol. Sci., Rev. Macromol. Chem. Phys. 1989, C29, 201.) and all contents calculated with respect to all other monomers present in the polymer.

Characteristic signals resulting from isolated 1-hexene incorporation i.e. EEHEE comonomer sequences, were observed. Isolated 1-hexene incorporation was quantified using the integral of the signal at 38.2 ppm assigned to the *B4 sites, accounting for the number of reporting sites per comonomer:

$$H = I_{*B4}$$

When characteristic signals resulting from consecutive 1-hexene incorporation, i.e. EHHE comonomer sequences were observed, such consecutive 1-hexene incorporation was quantified using the integral of the signal at 40.4 ppm assigned to the $\alpha\alpha$B4B4 sites accounting for the number of reporting sites per comonomer:

$$HH = 2 * I_{\alpha\alpha B4B4}$$

When characteristic signals resulting from non consecutive 1-hexene incorporation, i.e. EHEHE comonomer sequences were observed, such non-consecutive 1-hexene incorporation was quantified using the integral of the signal at 24.6 ppm assigned to the $\beta\beta$B4B4 sites accounting for the number of reporting sites per comonomer:

$$HEH = 2 * I_{\beta\beta B4B4}$$

Due to the overlap of the signals from the *B4 and *$\beta$B4B4 sites from isolated (EEHEE) and non-consecutively incorporated (EHEHE) 1-hexene respectively the total amount of isolated 1-hexene incorporation is corrected based on the amount of non-consecutive 1-hexene present:

$$H = I_{*B4} - 2 * I_{\beta\beta B4B4}$$

With no other signals indicative of other comonomer sequences, i.e. 1-hexene chain initiation, observed the total 1-hexene comonomer content was calculated based solely on the amount of isolated (EEHEE), consecutive (EHHE) and non-consecutive (EHEHE) 1-hexene comonomer containing sequences:

$$H_{total} = H + HH + HEH$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*( I_{2S} + I_{3S} )$$

The relative content of ethylene was quantified using the integral of the bulk methylene ($\delta$+) signals at 30.00 ppm:

$$E = (1/2)*I_{\delta+}$$

The total ethylene content was calculated based the bulk methylene signals and accounting for ethylene units present in other observed comonomer sequences or end-groups:

$$E_{total} = E + (2/2)*H + (1/4)*HH + (3/4)*HEH + (3/2)*S$$

The total mole fraction of 1-hexene in the polymer was then calculated as:

$$fH = H_{total} / ( E_{total} + H_{total} )$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner:

$$H [wt\%] = 100 * ( fH * 84.16) / ( (fH * 84.16) + ((1-fH) * 28.05) )$$

The comonomer incorporation of 1-hexene in mole percent in high Mw fraction was calculated from the total comonomer incorporation in the usual manner:

$$H \text{ in HMW } [mol\%] = 100 \% * H [mol\%] / \text{Split of HMW fraction } \%$$

Note, that amount of HDPE or LDPE color master batch carrier resin is not taken into account.

c) Molecular weight properties

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)}$$

$$M_w = \frac{\sum_{i=1}^{N} (A_i \ x \ M_i)}{\sum A_i}$$

$$M_z = \frac{\sum_{i=1}^{N} (A_i \ x \ M_i^2)}{\sum (A_i/M_i)}$$

For a constant elution interval $\Delta V_i$, where $A_i$ and $M_i$ are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methylphenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

**d)** Density

Density of the polymer was measured according to ISO 1183-1:2004 (method A) on compression moulded specimen prepared according to EN ISO 1872-2 (Feb 2007) and is given in $kg/m^3$.

**e)** Charpy impact strength (CIS)

Charpy impact strength was determined according to ISO179/1 eA:2000 on V-notched samples of 80*10*4 $mm^3$ at 23°C (Charpy impact strength (23°C)), at 0 °C (Charpy impact strength (0 °C)) and -20 °C (Charpy impact strength (-20 °C)). Samples were milled from plaques of 4 mm thickness prepared by compression molding according to ISO 293:2004 using the conditions defined in chapter 3.3 of ISO 1872-2:2007.

**f)** Strain Hardening Modulus

Strain hardening modulus of the compounds was obtained from a tensile stress-strain curve above the natural draw ratio and represents the slope of the increase in the stress-strain trend at very high strains (the strain hardening regime). It was measured at 80°C and 20 mm/min on preconditioned (120°C/1h) 300 $\mu$m thick specimens according to ISO 18488.

g) Eta747

One method which correlates well with the sagging properties, and is used in connection with the present invention relates to the rheology of the polymer and is based on determination of the viscosity of the polymer at a very low, constant shear stress. A shear stress of 747 Pa has been selected for this method. The viscosity of the polymer at this shear stress is determined at a temperature of 190 °C and has been found to be inversely proportional to the gravity flow of the polymer, i.e. the greater the viscosity the lower the gravity flow.

The determination of the viscosity at 747 Pa shear stress is made by using a rotational rheometer, which can be a constant stress rheometer as for example an Anton Paar MCR Series Rheometer. Rheometers and their function have been described in "Encyclopedia of Polymer Science and Engineering", 2nd Ed., Vol. 14, pp. 492-509. The measurements are performed under a constant shear stress between two 25 mm diameter plates (constant rotation direction). The gap between the plates is 1.2 mm. A 1.2 mm thick polymer sample is inserted between the plates.

The sample is temperature conditioned during 2 min before the measurement is started. The measurement is performed at 190 °C. After temperature conditioning the measurement starts by applying the predetermined stress. The stress is maintained during 1800 s to let the system approach steady state conditions. After this time the measurement starts and the viscosity is calculated.

The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.

**h)** Shear Thinning Index (SHI)

The Shear Thinning Index (SHI) is defined measured as described in EP 3088458 A1, in particular paragraphs [0127] to [0139].

**i)** Rapid crack propagation resistance

The rapid crack propagation (RCP) resistance of a pipe may be determined according to a method called the S4 test (Small Scale Steady State), which has been developed at Imperial College, London, and which is described in ISO 13477:2008. The outer diameter of the pipe is about 110 mm or greater and its wall thickness about 10 mm or greater. When determining the RCP properties of a pipe in connection with the present invention, the outer diameter and the wall thickness have been selected to be 110 mm and 10 mm, respectively. The length of the pipe is 785 mm. While the exterior of the pipe is at ambient pressure (atmospheric pressure), the pipe is pressurized internally, and the internal pressure in the pipe is kept constant at a pressure of 4.0 bar positive pressure. The length of the gauge is 590 mm. The pipe and the equipment surrounding it are conditioned to a predetermined temperature. A number of discs have been mounted on a shaft inside the pipe to prevent decompression during the tests. A knife projectile is shot, with well-defined forms, and a mass of 1500 g towards the pipe close to its one end in the so-called initiating zone in order to start a rapidly running axial crack. The speed of the knife is 16 +/-1 m/s. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 diameters, is measured for each test and is plotted against the set test temperature. If the crack length exceeds 4.7 diameters, the crack is assessed to propagate. If the pipe passes the test at a given temperature, the temperature is lowered successively until a temperature is reached, at which the pipe no longer passes the test where the crack propagation exceeds 4.7 times the pipe diameter.

The critical pressure ($p_{crit}$) evaluates a critical pressure at constant temperature (usually 0 °C) below which the rapid crack propagation is arrested. The higher the critical pressure the better, since it results in an extension of the applicability of the pipe.

j) Tensile properties

As a measure for stiffness, the tensile modulus (E-modulus) of the compositions was measured at 23 °C on compression molded specimens according to ISO 527-2:1993. The specimens (1B type) were milled from plaques of 4 mm thickness prepared by compression molding according to ISO 293:2004 using the conditions defined in chapter 3.3 of ISO 1872-2:2007. The modulus was measured at a speed of 1 mm/min.

Tensile properties such as tensile strength, including tensile stress at yield, strain at yield and elongation at break (i.e. tensile strain at break) is measured according to ISO 527-2 (cross head speed 50 mm/min) at a temperature of 23 °C.

**k) Pressure test on notched pipes (NPT)**

The slow crack propagation resistance is determined according to ISO 13479-2009 in terms of the number of hours the pipe withstands a certain pressure at a certain temperature before failure. The pressure test is carried out on notched SDR11 pipes having an outer diameter of 110 mm. A pressure of 9.2 bars and a temperature of 80 °C have been used. Notching is made with a climb milling cutter with a 60° included-angle V-cutter conforming to ISO 6108, having a cutting rate of 0.010 ± 0.002 (mm/rev)/tooth. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference.

The length of the notch is 110 ± 1 mm.

$$h = 0.5 \left[ d_{em} - \sqrt{(d_{em}^2 - b_s^2)} \right] + 0.866 b_s$$

where

$b_s$: is the width of machined surface of the notch, in millimeters;
$d_{em}$: is the measured mean pipe outside diameter, in millimeters.

l) Long Term Hydrostatic strength

Long term hydrostatic strength of the black PE pipe grade HE3490-SLS was tested at Element according to EN ISO 9080 and then MRS classification was done according to ISO 12162. The EN ISO 9080 evaluation of the pipe grade gives 50 years' strength values at 20°C.

The hydrostatic pressure testing was performed according to ISO 1167:2006. The pressure testing at 20, 40, 60 and 80°C was performed using deionised water on the inside and on the outside of the pipe specimens.

The results obtained from the hydrostatic pressure testing is given in Figure 3 and Table 3. The EN ISO 9080-evaluation consists of multiple linear regression analysis (MLR) on the stress rupture data obtained at the different test temperatures. The MLR is performed using the latest version of the software Pipeson Analyzer from Pipeson. The EN ISO 9080 also includes extrapolation factors that determine to what times it can be extrapolated at each temperature.

m) Average Chain Length and Degree of Polymerization

Average Chain Length and Degree of Polymerization were determined using quantitative $^{13}C\{^1H\}$ nuclear-magnetic resonance (NMR) spectroscopy as described above. Average Chain Length and Degree of Polymerization were calculated using corrected ratios of the signal integrals of representative sites in a manner known in the art.

**Examples**

Polyethylene base resins and compositions according to the invention (IR1 and IR2) were produced using a Ziegler-Natta catalyst A which was prepared as described in Example 1 of WO-A-99/51646.

For comparison, two comparative resins and compositions (CR1 and CR2) were produced using a Ziegler-Natta catalyst B which was commercially available solid polymerisation catalyst component Lynx 200™ sold by BASF Catalyst LLC.

The inventive and comparative resins were produced in the following way:
The polymerization was carried out in a Borstar (pilot) plant with a 2-reactor setup (loop - GPR) and a prepolymerization loop reactor according to the conditions as given in Table 1.

Into the prepolymerization a first loop reactor propane, ethylene, and hydrogen were introduced for conducting a pre-polymerization step. In addition, the Ziegler-Natta catalyst A or B was introduced into the reactor together with triethylaluminium cocatalyst so that the ratio of aluminium to titanium was 3 mol/mol (for catalyst A) or 15 mol/mol (for catalyst B).

The slurry was withdrawn intermittently from the prepolymerization reactor and directed to a second loop reactor. Additionally, propane, ethylene, triethylaluminium and hydrogen were fed to the second loop reactor whereby the ethylene concentration and the hydrogen to ethylene ratio for the inventive and reference example were adjusted so that ethylene homopolymers were produced having the $MFR_2$ and production split indicated in Table 1.

The slurry was withdrawn intermittently from the second loop reactor by using settling legs and directed to a gas phase reactor. Additional ethylene, 1-hexene or 1-butene comonomer, and hydrogen were fed whereby the 1-hexene to ethylene ratio, the $MFR_5$ as well as the production split and the density of the polymers withdrawn from the gas phase reactor are listed in Table 1.

The resulting polymer was purged with nitrogen for one hour, stabilised with commercial stabilisers, 1,100 ppm of Irganox 1010, 1,100 ppm Irgafos 168 and 1,100 ppm Ca-stearate and then extruded together with the amounts of carbon black indicated in Table 1 to pellets in a counter-rotating twin screw extruder CIM90P (manufactured by Japan Steel Works) in adiabatic mode i.e. barrels were not controlled by external heating/cooling.

Inventive resins 1 and 2 were produced with catalyst A and with 1-hexene co-monomer. Comparative Resins 1 and 2 were both produced with catalyst B, and co-monomer used was 1-hexene and 1-butene, respectively.

**Table 1:** Polymer composition and properties for the inventive resins and reference resins

| Parameter | Property | Unit | Inventive Resin 1 | Inventive Resin 2 | Comp. Resin 1 | Comp. Resin 2 |
|---|---|---|---|---|---|---|
| Catalyst | | | A | A | B | B |
| Co-monomer | | | Hexene | Hexene | Hexene | Butene |
| Pre Polymerisation Reactor | Pre Poly Split | % | 2.0 | 2.0 | 1.7 | 1.0 |
| | H2/C3 ratio | g/kg | 0.2 | 0.2 | n.m. | 0.2 |
| | Temp | °C | 70 | 70 | 60 | 60 |
| | Press | Bar g | 65.1 | 65.2 | 65.2 | 65.5 |
| loop Reactor homopolymer | Temp | °C | 95 | 95 | 95 | 95 |
| | Press | Bar g | 65 | 65 | 65 | 65 |
| | MFR2 | g/10 min | 160 - 170 | 150-180 | 200 | 280 |
| | Density | kg/m3 | 972-973.5 | 972-973 | 969.6 | 971 - 972 |
| | Loop Split | % | 45 | 49 | 48.1 | 46 |

(continued)

| Parameter | Property | Unit | Inventive Resin 1 | Inventive Resin 2 | Comp. Resin 1 | Comp. Resin 2 |
|---|---|---|---|---|---|---|
| Catalyst | | | A | A | B | B |
| Co-monomer | | | Hexene | Hexene | Hexene | Butene |
| GPR copolymer | MFR5 | g/10 min | 0.18 - 0.19 | 0.20, 0.21 | 0.25 | 0.25 |
| | Temp | °C | 85 | 85 | 85 | 85 |
| | Press | Bar g | 20 | 20 | 20 | 20 |
| | Density | kg/m3 | 949.6 - 951 | 950.1-951.3 | 951.1 | 950.5 |
| | C6/C2 Feed Ratio | mol/kmol | 24 | 27 | 30-31 | 26 |
| | C6/C2 Molar Ratio | mol/kmol | 48 | 40 | 19.3 -21.0 | 70 -75 (C4/C2) |
| | GPR Split Ratio | % | 53 | 49 | 50.2 | 53 |
| Final resin with carbon black | MFR5 FBL | g/10 min | 0.24 | 0.26 | 0.24 | 0.24 |
| | MFR21 FBL | g/10 min | 7.6 | 8.5 | 7.8 | 7.0 |
| | FRR (MFR21/MFR5) | | 32 | 33 | 32.6 | 29 |
| | Density | kg/m3 | 961.7-962.9 | 962 | 962.9 | 959.5 |
| | Carbon black content | wt. % | 2.24 | 2.15 | 2.3 | 2.3 |
| | SHI (5/300) | | 119 | 162 | 109 | n.m.* |
| | Eta 747 | kPa.s | 530 | 620 | 868 | n.m.* |
| | C6 (NMR) | wt. % | 0.9 | 0.75 | 1.18 | 1.1 |
| | Mn | gmol | 10650 | 9065 | 7835 | 7930 |
| | Mw | gmol | 247000 | 240500 | 247500 | 252000 |
| | Mz | gmol | 1375000 | 1395000 | 1435000 | 1430000 |
| | Mz+1 | gmol | 2835000 | 2800000 | 2890000 | 2775000 |
| | MWD | | 23.2 | 26.7 | 31.6 | 31.8 |
| | Mz/Mw | | 5.6 | 5.8 | 5.8 | 5.67 |
| | Mw/Mn | | 23.2 | 26.53 | 31.59 | 31.77 |
| | Mz+1/Mw | | 11.5 | 11.64 | 11.68 | 11.01 |
| Mechanical properties | Tensile modulus | MPa | 1180 | 1165 | 1091 | n.m.* |
| | Stress at Yield | MPa | 27.2 | 26.8 | 25.5 | n.m.* |
| | Strain at Yield | % | 8.6 | 8.1 | 9.7 | n.m.* |
| | Stress at Break | MPa | 22.1 | 30.2 | 29.4 | n.m.* |
| | Elongation at Break | % | 530 | 700 | 642 | n.m.* |
| | Impact at 23 °C | kJ/m2 | 26.1 | 25.8 | 34 | n.m.* |
| | Impact at -20 °C | kJ/m2 | 18.6 | 14 | 17.2 | n.m.* |
| | Strain hardening modulus | MPa | 56.4 | 54.9 | 54 | n.m.* |

(continued)

| Parameter | Property | Unit | Inventive Resin 1 | Inventive Resin 2 | Comp. Resin 1 | Comp. Resin 2 |
|---|---|---|---|---|---|---|
| Catalyst | | | A | A | B | B |
| Co-monomer | | | Hexene | Hexene | Hexene | Butene |
| | Pc S4 at 0Deg c | Bar | >15 | n.m.* | n.m.* | n.m.* |
| | NPT at 9.2 bar | hrs | 1056 | 924 | n.m.* | n.m.* |
| *n.m. = not measured | | | | | | |

It can be seen from the data in Table 1 that the $MFR_2$ of the LMW fraction of the Inventive resins produced in the loop reactor is in the range of 150 to 180 g/10 min, as compared to an $MFR_2$ of over 200g/10 min for comparative resins. However, the final MFR is well comparable for the inventive and comparative resins.

Tensile modulus of the inventive resins is higher than for the comparative resins.

Exceptional Rapid crack propagation property measured by ISO 13477 is achieved for IR1 with a critical pressure ($P_c$) at 0 °C of >15 bar.

Strain hardening modulus of inventive resins and reference resins are at comparable levels.

Sagging performance ($Eta_{747}$) of inventive resin is at required levels.

Furthermore, inventive resins 1 and 2 show narrower molecular weight distribution (MWD) as compared to comparative resins 1 and 2. NMR analysis results (Table 2) show the chain length of inventive resins are higher than reference resins.

Table 2:

| Sample | co-monomer content (wt. %) | Average Chain Length (carbons) | Degree of polymerization | Branches per chain |
|---|---|---|---|---|
| IR1 | 0.9 (C6) | 968 | 484 | 1.5 |
| IR2 | 0.86 (C6) | 1074 | 537 | 1.3 |
| CR1 | 0.98 (C6) | 855 | 428 | 1.4 |
| CR2 | 1.79 (C4) | 850 | 425 | 3.8 |

The unique combination of properties of the inventive resins results in an significant improvement in long term hydrostatic strength.

Long term hydrostatic strength was tested for IR1 according to EN ISO9080 testing method as described above. The tests showed that IR1 has a $sigma_{LPL}$ value of 11.65 MPa at 20 ° C and 50 yrs, and a $sigma_{LTHS}$ value of 11.93 MPa. Consequently, the resin fulfills a minimum required strength (MRS) classification of 11.2 MPa and is thereby designated as PE112 according to ISO 12162:2009. Although the inventive resin is rated PE112, it can be highlighted that the resin is extremely close to PE117.

**Claims**

1.  A polyethylene composition comprising a base resin which comprises

    (A) a first ethylene homo- or copolymer fraction, and
    (B) a second ethylene copolymer fraction,

    wherein

    fraction (A) has a lower molecular weight than fraction (B),
    fraction (A) is present in an amount of 45.0 to 55.0 wt.%, preferably 46.0 to 53.0 wt.%, more preferably 46.5 to 52.0 wt.%, based on the total weight of the base resin,

fraction (B) is present in an amount of 55.0 to 45.0 wt.%, preferably 54.0 to 47.0 wt.%, more preferably 53.5 to 48.0 wt.%, based on the total weight of the base resin,

the base resin has a density measured according to ISO 1183-1:2004 (method A) of 945 kg/m$^3$ to 958 kg/m$^3$, more preferably of 947 to 956 kg/m$^3$, and most preferably of 948 kg/m$^3$ to 954 kg/m$^3$,

the polyethylene composition has a melt flow rate MFR$_5$ determined according to ISO 1133 of 0.15 to 0.30 g/10min, preferably of 0.20 to 0.29 g/10min, and still more preferably of 0.22 to 0.28 g/10min,

the polyethylene composition has a flow rate ratio FRR$_{21/5}$ of 25 to 35, more preferably of 28 to 34,

the polyethylene composition has a molecular weight distribution MWD of 20 to 30, more preferably from 21 to 29, and

the polymer composition has an average chain length of 900 carbons or higher.

2. Polyethylene composition according to claim 1 wherein the second ethylene copolymer fraction (B) is a copolymer of ethylene and C$_4$-C$_{12}$ alpha-olefin, preferably is a copolymer of ethylene with 1-butene and/or 1-hexene, and most preferably is a copolymer of ethylene and 1-hexene.

3. Polyethylene composition according to any one of the preceding claims wherein fraction (A) has a melt flow rate MFR$_2$ determined according to ISO 1133 of 80 to 250 g/10min, more preferably of 100 to 200 g/10min, and most preferably of 120 to 190 g/10min.

4. Polyethylene composition according to any one of the preceding claims wherein the base resin has a content of units derived from alpha-olefins other than ethylene, most preferably from hexene-1, of 0.10 to 0.50 mol%, preferably of 0.15 to 0.45 mol%, and more preferably of 0.20 to 0.40 mol%.

5. Polyethylene composition according to any one of the preceding claims wherein fraction (B) of the base resin has a content of units derived from alpha-olefins other than ethylene, most preferably from hexene-1, of from 0.20 to 1.0 mol%, more preferably of from 0.30 to 0.9 mol% and most preferably of from 0.40 to 0.80 mol%.

6. Polyethylene composition according to any one of the preceding claims wherein the polymer composition has a degree of polymerization of 450 or higher.

7. Polyethylene composition according to any one of the preceding claims having a strain hardening modulus measured at 80°C and 20 mm/min on preconditioned (120°C/1h) 300 $\mu$m thick specimens according to ISO 18488 of 50 or higher, more preferably of 54.5 or higher.

8. Polyethylene composition according to any one of the preceding claims wherein the polyethylene composition has a weight average molecular weight of from 150,000 to 350,000 g/mol, more preferably of from 200,000 to 300,000 g/mol.

9. Polyethylene composition according to any one of the preceding claims wherein the composition has critical pressure p$_c$ in the rapid crack propagation (S4 test) as described in ISO 13477:2008 of 10 bar or higher, more preferably of 12 bar or higher.

10. Polyethylene composition according to any one of the preceding claims comprising from 1 to 8 wt.%, preferably from 1.5 to 3 wt.-% of carbon black based on the total weight of the polyethylene composition.

11. Polyethylene composition according claim 10 wherein the composition has a density measured according to ISO 1183-1:2004 (method A) of 955 kg/m$^3$ to 968 kg/m$^3$, more preferably of 957 to 966 kg/m$^3$, and most preferably of 958 kg/m$^3$ to 964 kg/m$^3$.

12. A process for producing a polyethylene composition according to any one of the preceding claims wherein the base resin is produced in a multi-stage polymerization process in the presence of a Ziegler-Natta catalyst.

13. A pipe comprising the polyethylene composition according to any one of claims 1 to 11.

14. Pipe according to claim 13 having a long term hydrostatic strength of 11.3 MPa or higher at 20 °C and 50 yrs according to EN ISO9080.

15. Use of a polyethylene composition according to any one of claims 1 to 11 for producing an article, especially a pipe.

Europäisches
Patentamt

European
Patent Office

Office européen
des brevets

# EUROPEAN SEARCH REPORT

**Application Number**

EP 22 15 0778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 464 457 A1 (BOREALIS AG [AT]) 10 April 2019 (2019-04-10) | 1,2,8, 12-15 | INV. C08L23/08 |
| A | * example ie3 * ----- | 3-7,9-11 | |
| X | EP 2 860 202 A1 (BOREALIS AG [AT]) 15 April 2015 (2015-04-15) * examples ie 1,2,3,5 * ----- | 1-15 | |

**TECHNICAL FIELDS SEARCHED (IPC)**

C08L

The present search report has been drawn up for all claims

| Place of search | Date of completion of the search | Examiner |
|---|---|---|
| Munich | 3 June 2022 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 0778

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2022

| Patent document cited in search report | | Publication date | Patent family member(s) | | Publication date |
|---|---|---|---|---|---|
| EP 3464457 | A1 | 10-04-2019 | CN | 109415544 A | 01-03-2019 |
| | | | EP | 3464457 A1 | 10-04-2019 |
| | | | US | 2019292283 A1 | 26-09-2019 |
| | | | WO | 2017207493 A1 | 07-12-2017 |
| EP 2860202 | A1 | 15-04-2015 | AU | 2014334203 A1 | 03-03-2016 |
| | | | CN | 105612185 A | 25-05-2016 |
| | | | EP | 2860202 A1 | 15-04-2015 |
| | | | JP | 6212633 B2 | 11-10-2017 |
| | | | JP | 2016536387 A | 24-11-2016 |
| | | | KR | 20160033766 A | 28-03-2016 |
| | | | PL | 2860202 T3 | 30-11-2018 |
| | | | WO | 2015051882 A1 | 16-04-2015 |

EPO FORM P0459

For more details about this annex : see Official Journal of the European Patent Office, No. 12/82

## REFERENCES CITED IN THE DESCRIPTION

### Patent documents cited in the description

- WO 0022040 A
- EP 1985660 A1
- US 4582816 A
- US 3405109 A
- US 3324093 A
- EP 479186 A
- US 5391654 A
- WO 9212182 A1
- WO 9618662 A1
- WO 2010054732 A
- WO 2006063771 A1

- EP 428054 A1
- WO 2016206768 A1
- EP 1378528 A1
- WO 9951646 A
- WO 0155230 A
- WO 2005118655 A
- EP 810235 A
- WO 2014096296 A
- WO 2016097193 A
- EP 3088458 A1

### Non-patent literature cited in the description

- **SCHEIRS ; BOHM ; BOOT ; LEEVERS.** PE100 Resins for Pipe Applications. *TRIP,* 1996, vol. 4 (12), 408-415
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373

- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45 (S1), S198
- **J. RANDALL.** *Macromol. Sci., Rev. Macromol. Chem. Phys.,* 1989, vol. C29, 201
- Encyclopedia of Polymer Science and Engineering. vol. 14, 492-509